# EUROPEAN PATENT APPLICATION

(11) **EP 4 280 681 A1**
(43) Date of publication of application: **22.11.2023**
(21) Application number: 21918686.3
(22) Date of filing: 18.01.2021
(51) Int. Cl.: H04W 36/00

(54) **COMMUNICATION METHOD AND COMMUNICATION DEVICE**

(71) Applicant: Beijing Xiaomi Mobile Software Co., Ltd., Beijing 100085 (CN)
(72) Inventor: DONG, Xiandong, Beijing 100085 (CN)
(74) Representative: dompatent von Kreisler Selting Werner - Partnerschaft von Patent- und Rechtsanwälten mbB
(86) International application number: PCT/CN2021/072547
(87) International publication number: WO 2022/151486

(57) **Abstract**

The present disclosure provides a communication method and a communication device. The communication method comprises: determining a first message frame, wherein the first message frame comprises information indicating dynamic connection switching; and sending the first message frame. The technical solutions provided in the exemplary embodiments of the present disclosure can satisfy dynamic switching requirement under multiple connections, improving the spectrum utilization rate.

## Description

### TECHNICAL FIELD

The present disclosure relates to the field of communication, and more particularly, to a communication method and a communication device in wireless communication.

### BACKGROUND

The current research scope of Wi-Fi technology is: 320MHz bandwidth transmission, aggregation and coordination of multiple frequency bands, etc. It is expected to increase the rate and throughput by at least four times compared with the existing standards. The main application scenarios are: video transmission, AR (Augmented Reality), VR (Virtual Reality), etc.

The aggregation and collaboration of multiple frequency bands refer to the simultaneous communication between devices in frequency bands such as 2.4GHz, 5GHz, and 6GHz. For simultaneous communication between devices in multiple frequency bands, a new MAC (Media Access Control) mechanism needs to be defined for management. In addition, it is also expected that the aggregation and coordination of multiple frequency bands can support low-latency transmission.

The current multi-band aggregation and system technology will support a maximum bandwidth of 320MHz (160MHz+160MHz), and may also support 240MHz (160MHz+80MHz) and other bandwidths.

In addition, researches are also conducted on multi-link handover in current communication technology, but there is no mechanism for link handover in the related art.

### SUMMARY

Aspects of the present disclosure are to address at least the above-mentioned problems and/or disadvantages. Various embodiments of the present disclosure provide the following technical solutions:

An example embodiment of the present disclosure provides a communication method on multiple links, including: determining a first message frame, where the first message frame includes information indicating dynamic link transition; and sending the first message frame.

An example embodiment of the present disclosure provides a communication method on multiple links, including: receiving a first message frame, where the first message frame includes information indicating dynamic link transition; performing link transition operation based on the first message frame.

An example embodiment of the present disclosure provides a device supporting multi-link communication, including: a processing module configured to: determine a first message frame, where the first message frame includes information indicating dynamic link transition; a communication module, which is configured to: send the first message frame.

An example embodiment of the present disclosure provides a device supporting multi-link communication, including: a communication module configured to: receive a first message frame, where the first message frame includes information indicating dynamic link transition; a processing module configured to: perform a link transition operation based on the first message frame.

An electronic device is provided according to example embodiments of the present disclosure. The electronic device includes a memory, a processor, and a computer program stored on the memory and executable by the processor. The processor executes the computer program to implement the method as described above.

A computer-readable storage medium is provided according to example embodiments of the present disclosure. A computer program is stored on the computer-readable storage medium. The computer program, when executed by a processor, implements the method as described above.

The technical solutions provided by the example embodiments of the present disclosure can meet the dynamic transition requirement of multi-link and improve the spectrum utilization rate.

### BRIEF DESCRIPTION OF THE DRAWINGS

The above and other features of the embodiments of the present disclosure will become more apparent by describing in detail the example embodiments of the present disclosure with reference to the accompanying drawings, where:
FIG. 1 is a diagram illustrating handover communication on multiple links according to an embodiment of the present disclosure.
FIG. 2 is a flowchart illustrating a communication method according to an embodiment of the present disclosure.
FIG. 3 is a flowchart illustrating another communication method according to an embodiment of the present disclosure.
FIG. 4 is a block diagram illustrating a communication device according to an embodiment of the present disclosure.

### DETAILED DESCRIPTION

The following description with reference to the accompanying drawings is provided to assist in a comprehensive understanding of various embodiments of the present disclosure as defined by the appended claims and their equivalents. Various embodiments of the present disclosure include various specific details, which are to be regarded as merely exemplary. Also, descriptions of well-known techniques, functions, and constructions may be omitted for clarity and conciseness.

The terms and words used in this disclosure are not limited to the bibliographical meanings, but, are merely used by the inventor to enable a clear and consistent understanding of the present disclosure. Accordingly, the descriptions of various embodiments of the present disclosure are provided for purposes of illustration and not of limitation to those skilled in the art.

It should be understood that the singular forms "a", "an", "the" and "the" as used herein can also include the plural forms unless the context clearly dictates otherwise. It should be further understood that the word "comprising" as used in this disclosure refers to the presence of the described features, integers, steps, operations, elements and/or components, but does not preclude the presence or addition of one or more other features, integers, steps, operations, elements, components and/or groups thereof.

It will be understood that, although the terms "first," "second," etc. may be used herein to describe various elements, these elements should not be limited by these terms. These terms are only used to distinguish one element from another. Thus, a first element discussed below could be termed a second element without departing from the teachings of example embodiments.

It will be understood that when an element is referred to as being "connected" or "coupled" to another element, it can be directly connected or coupled to the other element or intervening elements may also be present. Furthermore, "connected" or "coupled" as used herein may include wirelessly connected or wirelessly coupled. As used herein, the term "and/or" or the expression "at least one/at least one of" includes any and all combinations of one or more of the associated listed items.

Unless otherwise defined, all terms (including technical and scientific terms) used herein have the same meaning as commonly understood by one of ordinary skill in the art to which this disclosure belongs.

Embodiments of the present disclosure will be described in detail below with reference to the accompanying drawings.

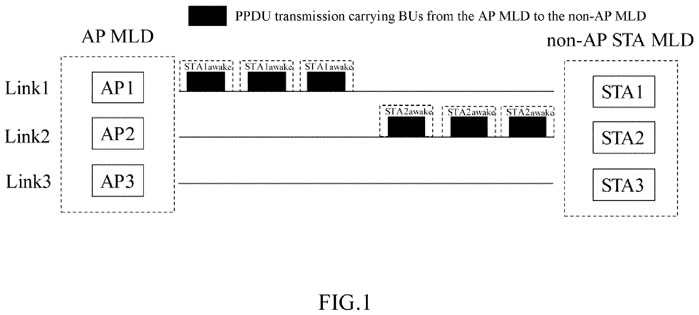

FIG. 1 is a diagram illustrating handover communication on multiple links according to an example embodiment of the present disclosure.

In a wireless local area network, a basic service set (BSS) may include an access point (AP: Access Point) and one or more devices (non-AP STAs, which may be referred to herein as "stations (STAs: Stations)") communicating with the AP. A basic service set can be connected to the distribution system DS (Distribution System) through its AP, and then connected to another basic service set to form an extended service set ESS (Extended Service Set).

AP is a wireless transition for wireless network, and it is also the core of wireless network. AP can be used as a wireless base station, mainly used as a bridge between wireless networks and wired networks. With this access point AP, wired and wireless networks can be integrated.

The AP may include software applications and/or circuitry to enable other types of nodes in the wireless network to communicate with device external or internal to the wireless network through the AP. In some examples, as an example, the AP may be a terminal device or a network device equipped with a Wi-Fi (Wireless Fidelity) chip.

As an example, non-AP STA (STA) may include, but is not limited to: cellular phone, smart phone, wearable device, computer, personal digital assistant (PDA), personal communication system (PCS) device, personal information manager (PIMs), Personal Navigation Device (PND), Global Positioning System, Multimedia Device, Internet of Things (IoT) device, etc.

In an example embodiment of the present disclosure, an AP (Access Point) and a non-AP STA (Station) may be devices that support multi-link communication, for example, may be represented as AP MLD and non-AP STA MLD (multi-link device), respectively. For convenience of description, hereinafter, an example in which one AP MLD communicates with one non-AP STA MLD on multiple links is mainly described, however, example embodiments of the present disclosure are not limited thereto.

In FIG. 1, for example only, the AP MLD may represent an access point supporting multi-link communication, and the non-AP STA MLD may represent a station supporting multi-link communication. Referring to FIG. 1, AP MLD can work on three links, such as AP1, AP2 and AP3 shown in FIG. 1, and non-AP STA MLD can also work on three links, as shown in FIG. 1, STA1, STA2 and STA3. In the example of FIG. 1, it is assumed that AP1 communicates with STA1 through a corresponding first link (Link 1), and similarly, AP2 and AP3 communicate with STA2 and STA3 through a second link (Link 2) and a third link (Link 3) respectively. In addition, Link 1 to Link 3 may be multiple links at different frequencies, for example, links at 2.4GHz, 5GHz, 6GHz, etc. or several links at 2.4GHz, 5GHz, 6GHz of the same or different bandwidths. Furthermore, multiple channels can exist on each link. However, it should be understood that the communication scenario shown in FIG. 1 is only illustrative, and the inventive concept is not limited thereto. For example, an AP MLD may be connected to a plurality of non-AP STA MLDs, or on each link, an AP can communicates with multiple other sites.

In addition, although it is shown in FIG. 1 that the first link (Link 1) to the third link (Link 3) all belong to the same AP MLD, the embodiments of the present disclosure are not limited thereto. For example, the first link (Link 1) to the third link (Link 3) may be links shared by the AP MLD shown in FIG. 1 with other AP MLDs.

In addition, although the number of multiple links between the AP MLD and the non-AP STA MLD is shown as three in FIG. 1, the embodiments of the present disclosure are not limited thereto, and there may be more or less links between them.

Referring to FIG. 1, a non-AP STA MLD can dynamically change its operating links using the power state of an attached station (e.g., any one of STA1 to STA3). FIG. 1 may shows an example of operation of single radio non-AP STA MLD with default mapping (all communication identifiers (TIDs: traffic identifiers) mapped to all setup links), where the non-AP STA MLD transitions from operating on Link 1 with STA 1 to operating on Link 2 with STA 2. The TIDs can correspond to different upper-layer services and QoS (Quality of Service) requirements.

When operating on Link 1, STA1 of non-AP STA MLD can use active mode or power save mode with awake state to acquire service unit (BU: buffer unit) from AP MLD, and can use a power save mode with doze state to save power. In this case, STA2 and STA3 may be in doze state.

When operating on Link 2, STA2 of the non-AP STA MLD can use active mode or power save mode with awake state to acquire service units from AP MLD, and can use power save mode with doze state to save power. In this case, STA1 and STA3 may be in doze state.

In addition, it will be understood that although FIG. 1 shows the operation of transitioning the attached stations of the non-AP STA MLD from Link 1 to Link 2, embodiments of the present disclosure are not limited thereto. For example, the attached access point of the AP MLD may also perform transition operation.

FIG. 1 shows the operation of the station STA2 after transitioning from Link 1 to Link 2, and an embodiment of dynamic transition such as transitioning from Link 1 to Link 2 will be described below.

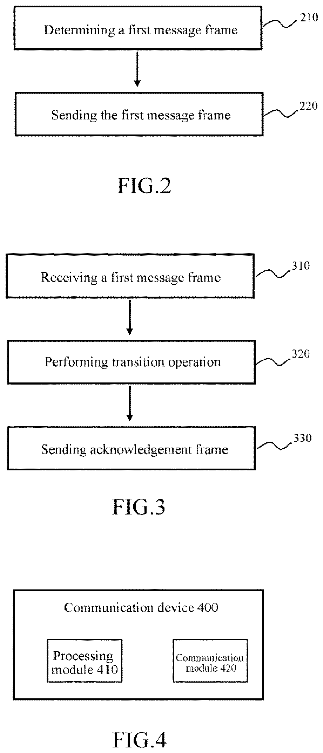

FIG. 2 is a flowchart illustrating a communication method according to an embodiment of the present disclosure. The communication method shown in FIG. 2 can be applied to a device supporting multi-link communication, for example, AP MLD or non-AP STA MLD. The communication method shown in FIG. 2 may be an operation performed by the sender. The sender may be one of AP MLD and non-AP STA MLD, and correspondingly, the receiver may be the other of AP MLD and non-AP STA MLD.

Referring to FIG. 2, in step 210, a first message frame may be determined, where the first message frame includes information indicating dynamic link transition. According to an embodiment of the present disclosure, the first message frame is a link transition frame, a data frame or an association frame. However, the present disclosure is not limited thereto, and other types of frames that can be used to transmit dynamic link transition information are also feasible. In an embodiment of the present disclosure, there may be many ways to determine the first message frame. For example, the sender may generate the first message frame according to at least one of the following conditions: network condition, load condition, the sending/receiving device's hardware capability, service type, and related protocols regulation; there is no specific limitation on this in embodiments of the present disclosure. In an embodiment of the present disclosure, the sender may also acquire the first message frame from an external device, and there is no specific limitation on this in embodiments of the present disclosure.

According to an embodiment of the present disclosure, the information indicating the dynamic link transition may be determined according to at least one of the following: the access delay time on each of the multiple links; load condition on each link; the requirement of the service to be sent.

In one embodiment, the access delay time on each of the multiple links may refer to the access delay time of each link, and may also refer to the average access delay time of the multiple links. For example, the load on each link may refer to the number of stations which communicate by that link. For example, the requirement of the service to be sent may refer to the requirement of the QoS of the service to be sent, for example, the delay requirement for transmitting the service.

According to an embodiment of the present disclosure, the information indicating the dynamic link transition may include information of the link to be transitioned to, for example, a link identifier of the link to be transitioned. In addition, the information indicating the dynamic link transition may also include at least one item of current link information and delay information of link transition. For example, the information of the current link may refer to the link identifier of the current link, and the delay information of the link transition may refer to the delay value of performing the link transition. More specifically, the delay value for performing the link transition may indicate that the transition operation is performed after the delay value has elapsed after the frame indicating the link transition is received. According to an embodiment of the present disclosure, the delay information may not be included, or the delay information may be set to a specific value (e.g., 0), thereby indicating that the link transition is performed without delay. According to an embodiment of the present disclosure, the delay information is set to other value, e.g., 5us, thereby indicating that the link transition is performed after an interval of 5us after the first message frame is received.

With reference to Fig. 1, when transitioning from Link 1 to Link 2, the information indicating the dynamic link transition may include the link identifier of the link Link 2 to be transitioned to, optionally, may further include at least one of the link identifier of the current link (Link 1) and the delay value of the transition from Link 1 to Link 2.

According to the embodiment of the present disclosure, the information indicating the dynamic link transition may be carried in the first message frame in the form of signaling. For example, the first message frame may be a link transition frame, and information indicating dynamic link transition may be included in the first message frame (i.e., the link transition frame) in the form of information elements shown in Table 1 below.

**Table 1**

| | | | | |
|---|---|---|---|---|
| Element ID | Length | Current link ID | Transition link ID | Transition delay |

It can be understood that each element shown in Table 1 exists independently, and these elements are exemplarily listed in the same table, but it does not mean that all elements in the table must exist simultaneously as shown in the table. The value of each of these elements is independent of the value of any other element in Table 1. Therefore, those skilled in the art can understand that the value of each element in the table of the present disclosure is an independent embodiment.

In Table 1, the Element ID and the Length may indicate the ID and length related to the information element. The Current Link ID may correspond to the information of the current link, the Transition Link ID may correspond to the information of the link to be transitioned to, and the Transition Delay may correspond to the delay information of the link transition.

According to an embodiment of the present disclosure, the first message frame may further include information indicating that the device sending the first message frame is in a power save state. For example, this information may be carried in the MAC frame header of the first message frame (e.g., link transitioning frame). For example, the information indicating that the device sending the first message frame is in a power save state may correspond to the PS (power save) bit in the power management (power management) field of the MAC frame header. For example, the device sending the first message frame may be in a power save state upon receiving an acknowledgment frame corresponding to the first message frame by setting the PS bit to a specific value (e.g., 1). In other words, if the acknowledgment frame is received, it means that the receiver which has received the first message frame will perform link transition according to the information indicating the dynamic link transition in the first message frame, so the sender on the current link can be in power save mode state. In addition, although it is described herein that the information indicating that the device sending the first message frame is in a power-saving state is not identified in the information elements shown in Table 1 (that is, the information indicating that the device sending the first message frame is in a power save state and the information indicating dynamic link transition are identified at different positions in the first message frame), but embodiments of the present disclosure are not limited thereto, and other information identification manners may be included within the scope of the present disclosure.

According to an embodiment of the present disclosure, the information indicating dynamic link transition may be included in the MAC header of the first message frame. For example, the information indicating dynamic link transition may be carried in the MAC frame header of a data frame or an associated frame. In one embodiment, the sender device may carry information indicating dynamic link transition in the MAC frame header of the transmitted MPDU (MAC Protocol Data Unit). Specifically, the control field in the MAC frame header can be reused to identify the information to be transitioned. For example, the information indicating the dynamic link transition can be carried in the form of the information elements shown in Table 1, or the first message frame (for example, the control field of the MAC frame header) can carry the information of the link to be transitioned to. In addition, it can also carry at least one of the information of the current link and the delay information of the link transition.

In one embodiment, only the information of the link to be transitioned to may be carried in the MAC header of the first message frame. For example, the first message frame (e.g., MAC frame header) may include link set information for a plurality of links, where a bit in the link set information corresponding to the link to be transitioned to is set to a first value (e.g., 1) to indicate transitioning to this link. With reference to FIG. 1, a link set with three bits can be used to represent three links (Link 1 to Link 2), and the link to be transitioned to is Link 2. For example, when the link set is represented as 010, it can be indicated that it will be transitioned to Link 2. It will be appreciated that although in this embodiment the first value is shown as 1, the present disclosure is not so limited and other values (e.g., 0) are possible. In addition, it will be appreciated that this manner of link set can also be applied to the information elements shown in Table 1, i.e., the Current link ID and Transition link ID in Table 1 can be replaced with the manner of link set.

According to an embodiment of the present disclosure, the link to be transitioned may be identified in the transmission link. With reference to FIG. 1, the transmission link may correspond to the current link (Link 1), and the link to be transitioned may correspond to the link (Link 2) to be transitioned to.

According to the embodiments of the present disclosure, a link transition frame can be generated in the transmission link according to the average access delay of the link or the load of the link, where the link transition frame carries the information of the link to be transitioned, for example, information element as shown in Table 1; and the transmission link is in the PS state after the transition is completed (that is, after the acknowledgment frame is received). For example, the PS bit of the power management field of the MAC frame header of the transition message frame can be set to "1" to indicate that it is in the PS state. The sender (e.g., station) on the transport link can doze after receiving the acknowledgment frame. Optionally, the information element described in Table 1 may carry the delay value of the transition, but the delay value may generally be set to "0" to indicate that the transition is performed without delay. In another embodiment, the AP may also configure a delay value for link transition. As an example, the delay value may be configured as 5us. For example, when the station acts as the sender for sending the first message frame, the delay value of the transition may be set to 0 by default or the configured delay value may be additionally received from the AP. For example, when the AP acts as the sender for sending the first message frame, the AP can directly configure the delay value in the information element shown in Table 1.

According to the embodiment of the present disclosure, the device of the transmission link may carry the indication of the transmission link to be transitioned in the MAC frame header of the transmitted MPDU. Specifically, the A-control field is reused to indicate that the device is to perform link transition. Specifically, it may be the form of the information element shown in Table 1, or the form of the link set as described above.

In step 220, a first message frame may be sent. When the sender sends the first message frame to the receiver, the sender may receive an acknowledgment frame from the receiver. When the sender receives the acknowledgment frame, it can be determined that the receiver will perform a link transition operation, and the current link can be put into doze state.

The communication method shown in FIG. 2 is only exemplary, and embodiments of the present disclosure are not limited thereto. In one embodiment, the communication method shown in FIG. 2 may further include at least one of the following: sending capability information of supporting multi-link operations, and sending capability information of supporting dynamic link transition. The multi-link operation may indicate enhanced multi-link multi-radio (EMLMR) or enhanced multi-link single radio (EMLSR). In the case where the sender only sends the capability information of supporting the multi-link operation, the sender supporting the multi-link operation may implicitly indicates that the sender supporting dynamic link transition. That is, the capability information of supporting multi-link operation may indicate capability information of supporting dynamic link transition.

According to the embodiments of the present disclosure, during the initial association process, the station and the AP can carry the capability information value of supporting multi-link operation, specifically EMLMR or EMLSR; or carry the capability information value of supporting dynamic link transition, or supporting the multi-link operation implicitly indicates supporting dynamic link transition.

FIG. 3 is a flowchart illustrating another communication method according to an example embodiment of the present disclosure. The flowchart of FIG. 3 may be operations performed on the receiver side, that is, operations corresponding to the operations of the initiator side shown in FIG. 2.

Referring to FIG. 3, in step 310, a first message frame may be received, where the first message frame includes information indicating dynamic link transition.

Similar to the above-mentioned embodiments, the information indicating the dynamic link transition may be determined according to at least one of the following: the access delay time on each link in the multiple links; the load condition on each link; the requirement of the service to be sent.

According to an embodiment, the information indicating the dynamic link transition may include information of the link to be transitioned to, and in addition, may also include at least one of information of the current link and delay information of the link transition. It will be understood that the first message frame and the information indicating the dynamic link transition may be similar to the description of step 210 of FIG. 2, and repeated descriptions are omitted here for brevity.

In step 320, a link transition operation may be performed based on the first message frame. For example, according to the information in the first message frame, the current link is transitioned to the to-be-transitioned link after the delay time indicated by the delay information of the link transition has elapsed.

In step 330, an acknowledgment frame corresponding to the first message frame may be sent, so that the sender sets the device corresponding to the current link to doze state after receiving the acknowledgment frame.

It can be understood that the flowchart of the communication method shown in FIG. 3 is only exemplary, and each step may be performed in a different order from that shown in FIG. 3, or each step may be performed in series or in parallel.

In one embodiment, although not shown, the communication method shown in FIG. 3 may further include: receiving capability information. For example, in an association phase between the receiver and the sender, the receiver may receive capability information of supporting multi-link operation sent from the sender and/or exchange capability information of supporting dynamic link transition. According to an embodiment, the multi-link operation may indicate Enhanced Multi-link Multi-Radio (EMLMR) or Enhanced Multi-link Single Radio (EMLSR). According to an embodiment, only capability information for multi-link operation may be exchanged. The capability information may indicate EMLMR or EMLSR, and may also implicitly indicate that it supports dynamic link transition.

FIG. 4 is a block diagram illustrating a communication device 400 according to an example embodiment of the present disclosure. The communication device 400 may include a processing module 410 and a communication module 420.

The communication device 400 shown in FIG. 4 may be applied to the sender. In this case, the processing module 410 may be configured to: determine a first message frame, where the first message frame may include information indicating dynamic link transition. The communication module 420 may be configured to: send the first message frame. In addition, the communication module 420 may transmit capability information of supporting multi-link operation and/or capability information of supporting dynamic link transition to the receiver, or receive such capability information from the receiver. That is, when the communication device 400 shown in FIG. 4 may be applied to the sender, the processing module 410 and the communication module 420 may perform the operations described with reference to FIG. 2, and repeated descriptions may be omitted here for brevity.

The communication device 400 shown in FIG. 4 may be applied to the receiver. In this case, the communication module 420 may be configured to: receive a first message frame, where the first message frame may include information indicating dynamic link transition. The processing module 410 may be configured to: perform the link transition operation based on the first message frame. In addition, the communication module 420 may transmit capability information of supporting multi-link operation and/or capability information of supporting dynamic link transition to the sender, or receive such capability information from the sender. That is, when the communication device 400 shown in FIG. 4 can be applied to the receiver, the processing module 410 and the communication module 420 can perform the operations described with reference to FIG. 3, and repeated descriptions may be omitted here for brevity.

It will be understood that the content of the first message frame, information, etc. involved in the communication device of FIG. 4 may be similar to the embodiments described with reference to FIG. 2 and/or Table 1, and repeated descriptions are omitted here for brevity. In addition, the communication device 400 shown in FIG. 4 is only exemplary, and embodiments of the present disclosure are not limited thereto. For example, the communication device 400 may further include other modules, such as a memory module and the like. Furthermore, the various modules in the communication device 400 may be combined into more complex modules, or may be divided into more separate modules to support various functions.

The communication methods shown in FIG. 2 and FIG. 3 and the communication device shown in FIG. 4 can meet the requirement of fast transition of multi-link device and improve the efficiency of spectrum utilization.

Based on the same principles as the methods provided by the embodiments of the present disclosure, the embodiments of the present disclosure further provide an electronic device, and the electronic device includes a processor and a memory; where, the memory stores machine-readable instructions (or may referred to as a "computer program"); the processor is used for executing machine-readable instructions to implement the methods described with reference to FIGS. 2 and 3.

Embodiments of the present disclosure also provide a computer-readable storage medium, where a computer program is stored on the computer-readable storage medium, and when the computer program is executed by a processor, the method described with reference to FIG. 2 and FIG. 3 is implemented.

In an example embodiment, a processor may be used to implement or execute various exemplary logical blocks, modules and circuits described in combination with the present disclosure, for example, a CPU (Central Processing Unit), general processor, DSP (Digital Signal Processor), ASIC (Application Specific Integrated Circuit), FPGA (Field Programmable Gate Array) or other programmable logic devices, transistor logic devices, hardware components or any combination thereof. A processor may also be a combination that implements computing functions, such as a combination of one or more microprocessors, a combination of a DSP and a microprocessor, and the like.

In an example embodiment, the memory may be, for example, ROM (Read Only Memory), RAM (Random Access Memory), EEPROM (Electrically Erasable Programmable Read Only Memory) Read Memory), CD-ROM (Compact Disc Read Only Memory) or other optical disk storage, optical disk storage (including compact disc, laser disc, optical disc, digital versatile disc, Blu-ray disc, etc.), magnetic disk storage medium or other magnetic A storage device, or any other medium that can be used to carry or store program code in the form of instructions or data structures and that can be accessed by a computer, without limitation.

It should be understood that although the various steps in the flowchart of the accompanying drawings are sequentially shown in the order indicated by the arrows, these steps are not necessarily executed in sequence in the order indicated by the arrows. Unless explicitly stated herein, the execution of these steps is not strictly limited to the order and may be performed in other orders. In addition, at least a part of the steps in the flowcharts of the accompanying drawings may include multiple sub-steps or multiple stages, and these sub-steps or stages are not necessarily executed at the same time, but may be executed at different times, and the execution sequence is also It does not have to be performed sequentially, but may be performed alternately or alternately with other steps or at least a portion of sub-steps or stages of other steps.

Although the present disclosure has been shown and described with reference to certain embodiments of the present disclosure, it will be understood by those skilled in the art that various changes in form and details may be made therein without departing from the scope of the present disclosure. Therefore, the scope of the present disclosure should not be limited by the embodiments, but should be defined by the appended claims and their equivalents.

## Claims

1. A communication method on multiple links, comprising:
determining a first message frame, wherein the first message frame comprises information indicating dynamic link transition;
sending the first message frame.

2. The communication method according to claim 1, wherein the information indicating the dynamic link transition is determined according to at least one of the following:
access delay time on each of the multiple links;
load condition under each link;
requirement of service to be sent.

3. The communication method according to claim 1, wherein the information indicating dynamic link transition comprises information of a link to be transitioned to.

4. The communication method according to claim 3, wherein the information indicating the dynamic link transition further comprises at least one of current link information and delay information of link transition.

5. The communication method according to claim 1, wherein the first message frame further comprises:
information indicating that a device sending the first message frame is in power save state.

6. The communication method according to claim 5, wherein the communication method further comprises:
in the case of receiving an acknowledgment frame corresponding to the first message frame, the device is in the power save state.

7. The communication method according to any one of claims 1 to 6, wherein the first message frame is a link transition frame, a data frame or an association frame.

8. The communication method according to claim 7, wherein, in a case where the first message frame is a link transition frame, the information indicating the dynamic link transition is in a form of an information element comprised in the first message frame.

9. The communication method according to claim 7, wherein, in a case where the first message frame is a data frame or an association frame, the information indicating the dynamic link transition is comprised in a MAC frame header of the first message frame.

10. The communication method according to claim 7, wherein the first message frame further comprises link set information indicating the multiple links,
wherein, a bit corresponding to a link to be transitioned to in the link set information is set to a first value to indicate transitioning to the link.

11. The communication method according to claim 1, wherein the communication method further comprises:
sending capability information of supporting multi-link operation,
wherein, the multi-link operation indicates enhanced multi-link multi-radio communication or enhanced multi-link single-radio communication.

12. The communication method according to claim 11, wherein the capability information of supporting the multi-link operation indicates capability information of supporting the dynamic link transition.

13. The communication method according to claim 1, wherein the communication method further comprises:
sending capability information of supporting the dynamic link transition.

14. A communication method on multiple links, comprising:
receiving a first message frame, wherein the first message frame comprises information indicating dynamic link transition;
performing link transition operation based on the first message frame.

15. The communication method according to claim 14, wherein the information indicating dynamic link transition is determined according to at least one of the following:
access delay time under each of the multiple links;
load condition under each link;
requirement of service to be sent.

16. The communication method according to claim 14, wherein the information indicating the dynamic link transition comprises information of a link to be transitioned to.

17. The communication method according to claim 16, wherein the information indicating the dynamic link transition further comprises at least one of current link information and delay information of link transition.

18. The communication method according to claim 14, wherein the first message frame further comprises:
information indicating that a device sending the first message frame is in power save state.

19. The communication method according to claim 18, wherein the communication method further comprises:
sending an acknowledgment frame corresponding to the first message frame, so that the device is in the power save state.

20. The communication method according to any one of claims 14 to 19, wherein the first message frame is a link transitioning frame, a data frame or an association frame.

21. The communication method according to claim 20, wherein, in a case where the first message frame is a link transitioning frame, the information indicating the dynamic link transition is in a form of an information element comprised in the first message frame.

22. The communication method according to claim 20, wherein, when the first message frame is a data frame or an association frame, the information indicating dynamic link transition is comprised in a MAC frame header of the first message frame.

23. The communication method according to claim 20, wherein the first message frame further comprises link set information indicating the multiple links,
wherein, a bit corresponding to a link to be transitioned to in the link set information is set to a first value to indicate transitioning to the link.

24. The communication method according to claim 1, wherein the communication method further comprises:
receiving capability information of supporting multi-link operation,
wherein, the multi-link operation indicates enhanced multi-link multi-radio communication or enhanced multi-link single-radio communication.

25. The communication method according to claim 24, wherein the capability information of supporting the multi-link operation indicates capability information of supporting the dynamic link transition.

26. The communication method according to claim 14, wherein the communication method further comprises:
receiving capability information of supporting the dynamic link transition.

27. A device supporting multi-link communication, comprising:
a processing module configured to: determine a first message frame, wherein the first message frame comprises information indicating dynamic link transition;
a communication module, configured to: send the first message frame.

28. A device that supports multi-link communication, comprising:
a communication module configured to: receive a first message frame, wherein the first message frame comprises information indicating dynamic link transition;
a processing module is configured to: perform a link transition operation based on the first message frame.

29. An electronic device, comprising a memory, a processor, and a computer program stored on the memory and executable on the processor, wherein the processor implements the method according to any one of claims 1 to 13 or any one of claims 14 to 26 when the processor executes the computer program.

30. A computer-readable storage medium, wherein a computer program is stored on the computer-readable storage medium, and when the computer program is executed by a processor, the method according to any one of claims 1 to 13 or any one of claims 14 to 26 is implemented.
